(19) Europäisches Patentamt
European Patent Office
Office européen des brevets

(11) **EP 3 524 494 B1**

(12) **EUROPEAN PATENT SPECIFICATION**

(45) Date of publication and mention of the grant of the patent:
**09.06.2021 Bulletin 2021/23**

(51) Int Cl.:
**B62D 15/02** *(2006.01)*      **G05D 1/02** *(2020.01)*
**G08G 1/16** *(2006.01)*

(21) Application number: **19152960.1**

(22) Date of filing: **22.01.2019**

(54) **LANE SELF-LOCALIZATION SYSTEM USING MULTIPLE CAMERAS FOR AUTONOMOUS DRIVING VEHICLES**

SPURSELBSTLOKALISIERUNGSSYSTEM MIT MEHREREN KAMERAS FÜR SELBSTFAHRENDE FAHRZEUGE

SYSTÈME D'AUTO-LOCALISATION DE VOIE AU MOYEN DE PLUSIEURS CAMÉRAS POUR VÉHICULES À CONDUITE AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.02.2018 US 201815891360**

(43) Date of publication of application:
**14.08.2019 Bulletin 2019/33**

(73) Proprietor: **Baidu USA LLC**
**Sunnyvale, California 94089 (US)**

(72) Inventor: **Zhu, Fan**
**Sunnyvale, CA 94089 (US)**

(74) Representative: **Nederlandsch Octrooibureau**
**P.O. Box 29720**
**2502 LS The Hague (NL)**

(56) References cited:
**US-A1- 2016 314 358      US-B1- 6 173 222**

**Description**

TECHNICAL FIELD

Embodiments of the present disclosure relate generally to operating autonomous vehicles. More particularly, embodiments of the disclosure relate to - lane self-localization for autonomous driving vehicles.

BACKGROUND

Vehicles operating in an autonomous mode (e.g., driverless) can relieve occupants, especially the driver, from some driving-related responsibilities. When operating in an autonomous mode, the vehicle can navigate to various locations using onboard sensors, allowing the vehicle to travel with minimal human interaction or in some cases without any passengers.

Motion planning and control are critical operations in autonomous driving. Such operations rely on the locations or positions of the vehicles, which may be determined based on global positioning system (GPS) as well as other sensors such as IMU units of the vehicle. Such locations are referred to as absolute locations in view of the map. However, sometimes a local relative position within a road or lane is also important for autonomous driving. Such determination of local relative position is referred to as self-localization. Self-localization is always a challenge problem and there has not been any efficient ways to determine the local relative position of autonomous driving vehicles (ADVs).

US patent 6,173,222 B1, considered as the closest prior art, provides a steering control system and method for autonomous intelligent vehicle, where a distance d1 between the right side of the vehicle and the right road lane marker and determining a distance d2 between the left side of the vehicle and the left road lane marker are determined through first and second cameras mounted on opposite sides of the front of a vehicle. US patent application publication 2016/0314358 A1 provides an electronic device having a function of identifying a lane on which a vehicle is traveling based on image data, where distances between the vehicle and the both sides of a road lane through a rear camera which is for providing image of a rearward field of view of the vehicle.

SUMMARY

In an aspect of the disclosure, a computer-implemented method for self-localization of an autonomous driving vehicle is provided, the method including: measuring a first distance (L1) between a frontend of an autonomous driving vehicle (ADV) and a left edge of a lane in which the ADV is driving based on a first image captured by a first camera mounted on a first location of the frontend of the ADV; measuring a second distance (L2) between the frontend of the ADV and a right edge of the lane based on a second image captured by a second camera mounted on a second location of the frontend of the ADV; measuring a third distance (L3) between a backend of the ADV and the left edge of the lane based on a third image captured by a third camera mounted on a third location of the backend of the ADV; measuring a fourth distance (L4) between the backend of the ADV and the right edge of the lane based on a fourth image captured by a fourth camera mounted on a fourth location of the backend of the ADV; and determining a local relative position of the ADV within the lane based on the first distance, the second distance, the third distance, and the fourth distance, where determining a local relative position of the ADV within the lane comprises calculating an angle between a heading direction of the ADV and a center line of the lane based on the first distance and the third distance or based on the second distance and the fourth distance in view of a physical dimension of the ADV.

In another aspect of the disclosure, a non-transitory machine-readable medium having instructions stored therein is provided. The instructions when executed by a processor, cause the processor to perform operations, the operations including: measuring a first distance (L1) between a frontend of an autonomous driving vehicle (ADV) and a left edge of a lane in which the ADV is driving based on a first image captured by a first camera mounted on a first location of the frontend of the ADV; measuring a second distance (L2) between the frontend of the ADV and a right edge of the lane based on a second image captured by a second camera mounted on a second location of the frontend of the ADV; measuring a third distance (L3) between a backend of the ADV and the left edge of the lane based on a third image captured by a third camera mounted on a third location of the backend of the ADV; measuring a fourth distance (L4) between the backend of the ADV and the right edge of the lane based on a fourth image captured by a fourth camera mounted on a fourth location of the backend of the ADV; and determining a local relative position of the ADV within the lane based on the first distance, the second distance, the third distance, and the fourth distance, where determining a local relative position of the ADV within the lane comprises calculating an angle between a heading direction of the ADV and a center line of the lane based on the first distance and the third distance or based on the second distance and the fourth distance in view of a physical dimension of the ADV.

In another aspect of the disclosure, a data processing system is provided. The system includes a processor; and a memory coupled to the processor to store instructions, which when executed by the processor, cause the processor to perform operations, the operations including measuring a first distance (L1) between a frontend of an autonomous driving vehicle (ADV) and a left edge of a lane in which the ADV is driving based on a first image captured by a first camera mounted on a first location of the frontend of the ADV; measuring a second distance (L2) between the frontend of the ADV and a right edge of the lane based on a second image captured by a second camera mounted on a second location of the frontend of the ADV; measuring a third distance (L3) between a backend of the ADV and the left edge of the lane based on a third image captured by a third camera mounted on a third location of the backend of the ADV; measuring a fourth distance (L4) between the backend of the ADV and the right edge of the lane based on a fourth image captured by a fourth camera mounted on a fourth location of the backend of the ADV; and determining a local relative position of the ADV within the lane based on the first distance, the second distance, the third distance, and the fourth distance, where determining a local relative position of the ADV within the lane comprises calculating an angle between a heading direction of the ADV and a center line of the lane based on the first distance and the third distance or based on the second distance and the fourth distance in view of a physical dimension of the ADV.

BRIEF DESCRIPTION OF THE DRAWINGS

Embodiments of the disclosure are illustrated by way of example and not limitation in the figures of the accompanying drawings in which like references indicate similar elements.

Figure 1 is a block diagram illustrating a networked system according to one embodiment.
Figure 2 is a block diagram illustrating an example of an autonomous vehicle according to one embodiment.
Figures 3A-3B are block diagrams illustrating an example of a perception and planning system used with an autonomous vehicle according to one embodiment.
Figure 4 is a diagram illustrating self-localization of an autonomous driving vehicle according to one embodiment.
Figure 5 is a flow diagram illustrating a process of determining local relative position of a vehicle within a lane according to one embodiment.
Figure 6 is a flow diagram illustrating a process of evaluating autonomous driving system according to one embodiment.
Figure 7 is a block diagram illustrating a data processing system according to one embodiment.

DETAILED DESCRIPTION

Various embodiments and aspects of the disclosures will be described with reference to details discussed below, and the accompanying drawings will illustrate the various embodiments. The following description and drawings are illustrative of the disclosure and are not to be construed as limiting the disclosure. Numerous specific details are described to provide a thorough understanding of various embodiments of the present disclosure. However, in certain instances, well-known or conventional details are not described in order to provide a concise discussion of embodiments of the present disclosures.

Reference in the specification to "one embodiment" or "an embodiment" means that a particular feature, structure, or characteristic described in conjunction with the embodiment can be included in at least one embodiment of the disclosure. The appearances of the phrase "in one embodiment" in various places in the specification do not necessarily all refer to the same embodiment.

According to some embodiments, a self-localization system is utilized in an autonomous driving vehicle to determine a relative position within a lane in which the vehicle is driving using certain sensors mounted on a variety of locations or spots of the vehicles. For example, certain cameras may be mounted on different locations of the vehicles to capture images with respect to the surrounding environment of the vehicle. Based on the captured images, distances between the vehicle and the edges of the lane or road may be determined using an image recognition process or algorithm. Based on the distances between the vehicle and the edges of the lane, the relative position of the vehicle within the lane can be determined. A relative position of a vehicle within a lane refers to an angle of a heading direction of the vehicle and a longitudinal vector of a center line or reference line of the lane, and a distance between the vehicle and the center line or reference line of the lane.

According to one embodiment, a first distance (L1) between a frontend of an ADV and a left edge of a lane in which the ADV is driving is measured based on a first image captured by a first camera mounted on a first location of the frontend of the ADV. A second distance (L2) between the frontend of the ADV and a right edge of the lane is measured based on a second image captured by a second camera mounted on a second location of the frontend of the ADV. A third distance between a backend of the ADV and the left edge of the lane is measured based on a third image captured by a third camera mounted on a third location of the backend of the ADV. A fourth distance between the backend of the ADV and the right edge of the lane is measured based on a fourth image captured by a fourth camera mounted on a fourth location of the backend of the ADV. A local relative position of the ADV within the lane is determined based on the first distance, the second distance, the third distance, and the fourth distance.

In addition, an angle between a heading direction of the ADV and a center line of the lane is calculated based on the first distance, the second distance, the third distance, and the fourth distance in view of a physical dimension of the ADV. In one embodiment, the angle between the heading direction of the ADV and the center line of the lane is determined based on a difference between distances L1 and L3 or a difference between distances L2 and L4 in view of a vehicle length (VL) of the ADV. Specifically, according to a particular embodiment, the angle may be determined based on arcsin (|L1 - L3| / VL) or arcsin (|L2-L4| / VL).

In calculating the relative position within the lane, according to one embodiment, a fifth distance between a center point of the ADV and the centerline of the lane is calculated based on the first distance, the second distance, the third distance, and the fourth distance, where the fifth distance and the angle between the heading direction of the vehicle and the center line are utilized to represent the local relative position of the vehicle within the lane. In one particular embodiment, the fifth distance is determined based on (L1 + L3 - L2 - L4) / 2. In one embodiment, the first camera is mounted on a front left corner of the ADV and the second camera is mounted on a front right corner of the ADV. The third camera is mounted on a back left corner of the ADV and the fourth camera is mounted on a back right corner of the ADV.

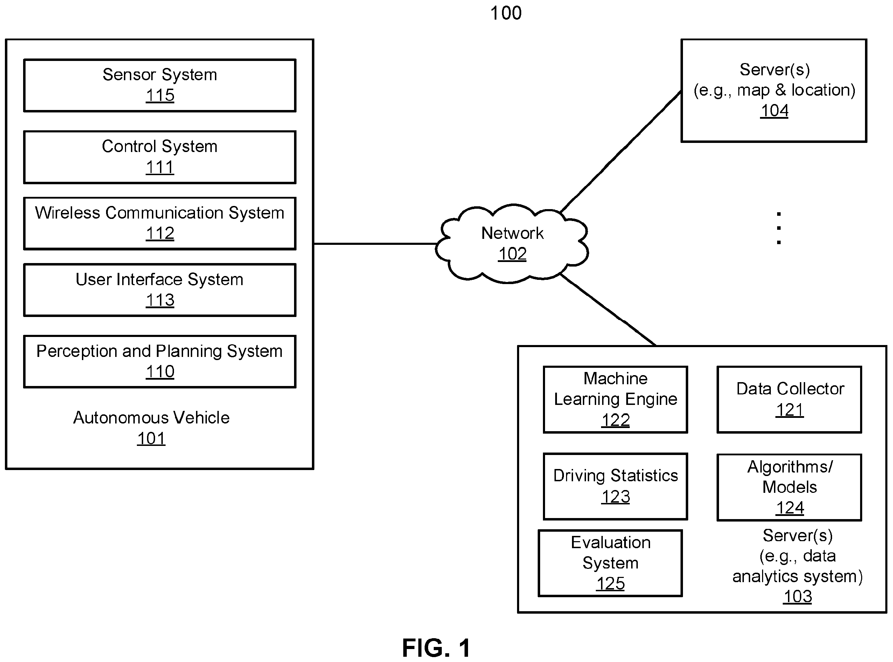

Figure 1 is a block diagram illustrating an autonomous vehicle network configuration according to one embodiment of the disclosure. Referring to Figure 1, network configuration 100 includes autonomous vehicle 101 that may be communicatively coupled to one or more servers 103-104 over a network 102. Although there is one autonomous vehicle shown, multiple autonomous vehicles can be coupled to each other and/or coupled to servers 103-104 over network 102. Network 102 may be any type of networks such as a local area network (LAN), a wide area network (WAN) such as the Internet, a cellular network, a satellite network, or a combination thereof, wired or wireless. Server(s) 103-104 may be any kind of servers or a cluster of servers, such as Web or cloud servers, application servers, backend servers, or a combination thereof. Servers 103-104 may be data analytics servers, content servers, traffic information servers, map and point of interest (MPOI) severs, or location servers, etc.

An autonomous vehicle refers to a vehicle that can be configured to in an autonomous mode in which the vehicle navigates through an environment with little or no input from a driver. Such an autonomous vehicle can include a sensor system having one or more sensors that are configured to detect information about the environment in which the vehicle operates. The vehicle and its associated controller(s) use the detected information to navigate through the environment. Autonomous vehicle 101 can operate in a manual mode, a full autonomous mode, or a partial autonomous mode.

In one embodiment, autonomous vehicle 101 includes, but is not limited to, perception and planning system 110, vehicle control system 111, wireless communication system 112, user interface system 113, infotainment system 114, and sensor system 115. Autonomous vehicle 101 may further include certain common components included in ordinary vehicles, such as, an engine, wheels, steering wheel, transmission, etc., which may be controlled by vehicle control system 111 and/or perception and planning system 110 using a variety of communication signals and/or commands, such as, for example, acceleration signals or commands, deceleration signals or commands, steering signals or commands, braking signals or commands, etc.

Components 110-115 may be communicatively coupled to each other via an interconnect, a bus, a network, or a combination thereof. For example, components 110-115 may be communicatively coupled to each other via a controller area network (CAN) bus. A CAN bus is a vehicle bus standard designed to allow microcontrollers and devices to communicate with each other in applications without a host computer. It is a message-based protocol, designed originally for multiplex electrical wiring within automobiles, but is also used in many other contexts.

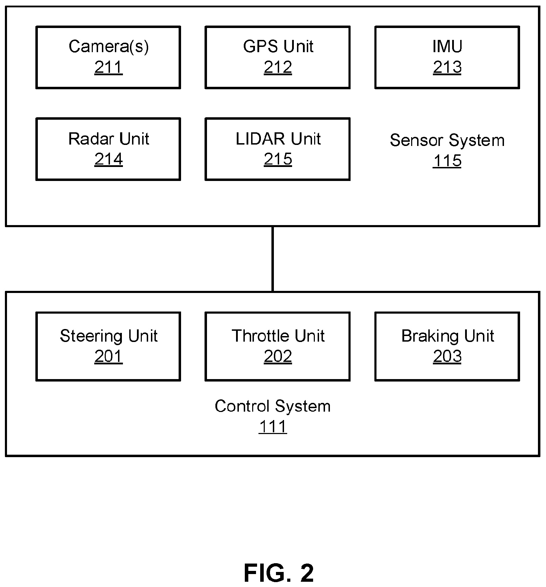

Referring now to Figure 2, in one embodiment, sensor system 115 includes, but it is not limited to, one or more cameras 211, global positioning system (GPS) unit 212, inertial measurement unit (IMU) 213, radar unit 214, and a light detection and range (LIDAR) unit 215. GPS system 212 may include a transceiver operable to provide information regarding the position of the autonomous vehicle. IMU unit 213 may sense position and orientation changes of the autonomous vehicle based on inertial acceleration. Radar unit 214 may represent a system that utilizes radio signals to sense objects within the local environment of the autonomous vehicle. In some embodiments, in addition to sensing objects, radar unit 214 may additionally sense the speed and/or heading of the objects. LIDAR unit 215 may sense objects in the environment in which the autonomous vehicle is located using lasers. LIDAR unit 215 could include one or more laser sources, a laser scanner, and one or more detectors, among other system components. Cameras 211 may include one or more devices to capture images of the environment surrounding the autonomous vehicle. Cameras 211 may be still cameras and/or video cameras. A camera may be mechanically movable, for example, by mounting the camera on a rotating and/or tilting a platform.

Sensor system 115 may further include other sensors, such as, a sonar sensor, an infrared sensor, a steering sensor, a throttle sensor, a braking sensor, and an audio sensor (e.g., microphone). An audio sensor may be configured to capture sound from the environment surrounding the autonomous vehicle. A steering sensor may be configured to sense the steering angle of a steering wheel, wheels of the vehicle, or a combination thereof. A throttle sensor and a braking sensor sense the throttle position and braking position of the vehicle, respectively. In some situations, a throttle sensor and a braking sensor may be integrated as an integrated throttle/braking sensor.

In one embodiment, vehicle control system 111 includes, but is not limited to, steering unit 201, throttle unit 202 (also referred to as an acceleration unit), and braking unit 203. Steering unit 201 is to adjust the direction or heading of the vehicle. Throttle unit 202 is to control the speed of the motor or engine that in turn control the speed and acceleration of the vehicle. Braking unit 203 is to decelerate the vehicle by providing friction to slow the wheels or tires of the vehicle. Note that the components as shown in Figure 2 may be implemented in hardware, software, or a combination thereof.

Referring back to Figure 1, wireless communication system 112 is to allow communication between autonomous vehicle 101 and external systems, such as devices, sensors, other vehicles, etc. For example, wireless communication system 112 can wirelessly communicate with one or more devices directly or via a communication network, such as servers 103-104 over network 102. Wireless communication system 112 can use any cellular communication network or a wireless local area network (WLAN), e.g., using WiFi to communicate with another component or system. Wireless communication system 112 could communicate directly with a device (e.g., a mobile device of a passenger, a display device, a speaker within vehicle 101), for example, using an infrared link, Bluetooth, etc. User interface system 113 may be part of peripheral devices implemented within vehicle 101 including, for example, a keyword, a touch screen display device, a microphone, and a speaker, etc.

Some or all of the functions of autonomous vehicle 101 may be controlled or managed by perception and planning system 110, especially when operating in an autonomous driving mode. Perception and planning system 110 includes the necessary hardware (e.g., processor(s), memory, storage) and software (e.g., operating system, planning and routing programs) to receive information from sensor system 115, control system 111, wireless communication system 112, and/or user interface system 113, process the received information, plan a route or path from a starting point to a destination point, and then drive vehicle 101 based on the planning and control information. Alternatively, perception and planning system 110 may be integrated with vehicle control system 111.

For example, a user as a passenger may specify a starting location and a destination of a trip, for example, via a user interface. Perception and planning system 110 obtains the trip related data. For example, perception and planning system 110 may obtain location and route information from an MPOI server, which may be a part of servers 103-104. The location server provides location services and the MPOI server provides map services and the POIs of certain locations. Alternatively, such location and MPOI information may be cached locally in a persistent storage device of perception and planning system 110.

While autonomous vehicle 101 is moving along the route, perception and planning system 110 may also obtain real-time traffic information from a traffic information system or server (TIS). Note that servers 103-104 may be operated by a third party entity. Alternatively, the functionalities of servers 103-104 may be integrated with perception and planning system 110. Based on the real-time traffic information, MPOI information, and location information, as well as real-time local environment data detected or sensed by sensor system 115 (e.g., obstacles, objects, nearby vehicles), perception and planning system 110 can plan an optimal route and drive vehicle 101, for example, via control system 111, according to the planned route to reach the specified destination safely and efficiently.

Server 103 may be a data analytics system to perform data analytics services for a variety of clients. In one embodiment, data analytics system 103 includes data collector 121 and machine learning engine 122. Data collector 121 collects driving statistics 123 from a variety of vehicles, either autonomous vehicles or regular vehicles driven by human drivers. Driving statistics 123 include information indicating the driving commands (e.g., throttle, brake, steering commands) issued and responses of the vehicles (e.g., speeds, accelerations, decelerations, directions) captured by sensors of the vehicles at different points in time. Driving statistics 123 may further include information describing the driving environments at different points in time, such as, for example, routes (including starting and destination locations), MPOIs, road conditions, weather conditions, etc.

Based on driving statistics 123, machine learning engine 122 generates or trains a set of rules, algorithms, and/or predictive models 124 for a variety of purposes. In one embodiment, algorithms 124 may include at least one algorithm to calculate and determine a local relative position of an ADV within a lane. A local relative position of the vehicle refers to an angle between a heading direction of the vehicle and a direction of the lane in which the vehicle is moving. The direction of the lane may refer to a longitudinal vector associated with a center line of the lane. The local relative position may also be represented by a distance between the vehicle and the center line, such as, for example, a lateral or shortest distance between the center of the vehicle and the center line. That is, a local relative position of a vehicle is represented by (1) an angle between a heading direction of the vehicle and the longitudinal vector of the center line and (2) the shortest distance between the center of the vehicle and the center line. In one embodiment, the angle and distance between the vehicle and the center line can be calculated based on images captured by a variety of cameras mounted on different locations or spots of the vehicle. Such algorithms 124 can then be uploaded onto an autonomous driving vehicle at real-time.

According to one embodiment, the images may also be collected by the vehicles and stored as part of driving statistics 123 over a period of time using a particular autonomous driving system or method. Evaluation system 125 may be invoked to analyze that particular autonomous driving system or method by determining the local relative position within the lanes that the vehicles have been driven based on the images. Based on the local relative positions in view of the global absolute positions of the vehicles at different points in time or under different driving scenarios or driving environments, the evaluation system 125 can determine whether the autonomous driving system needs to be adjusted or improved. Such an evaluation process can be performed offline based on the driving statistics 123 collected from a variety of vehicles driven in the past.

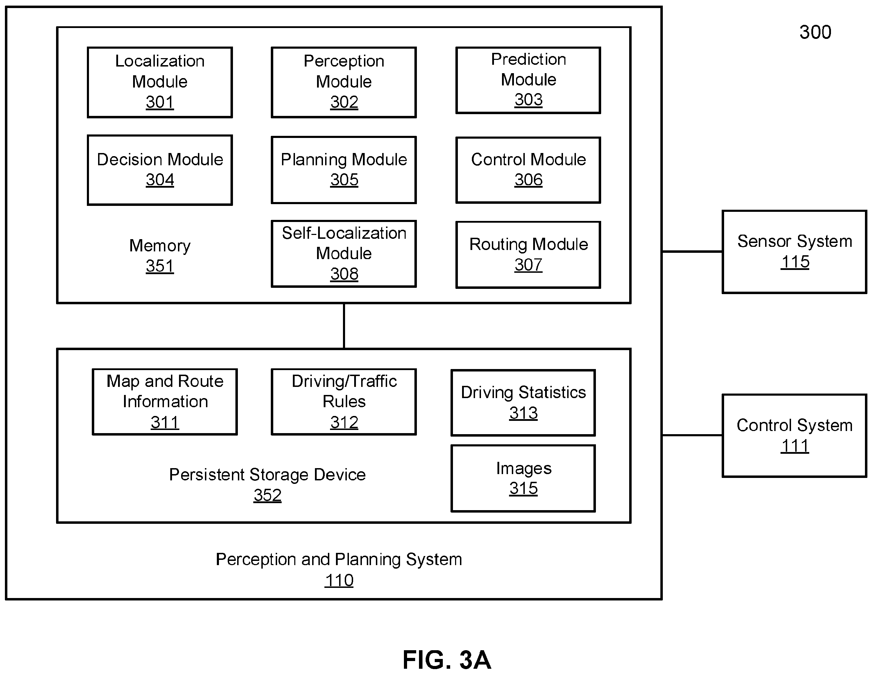

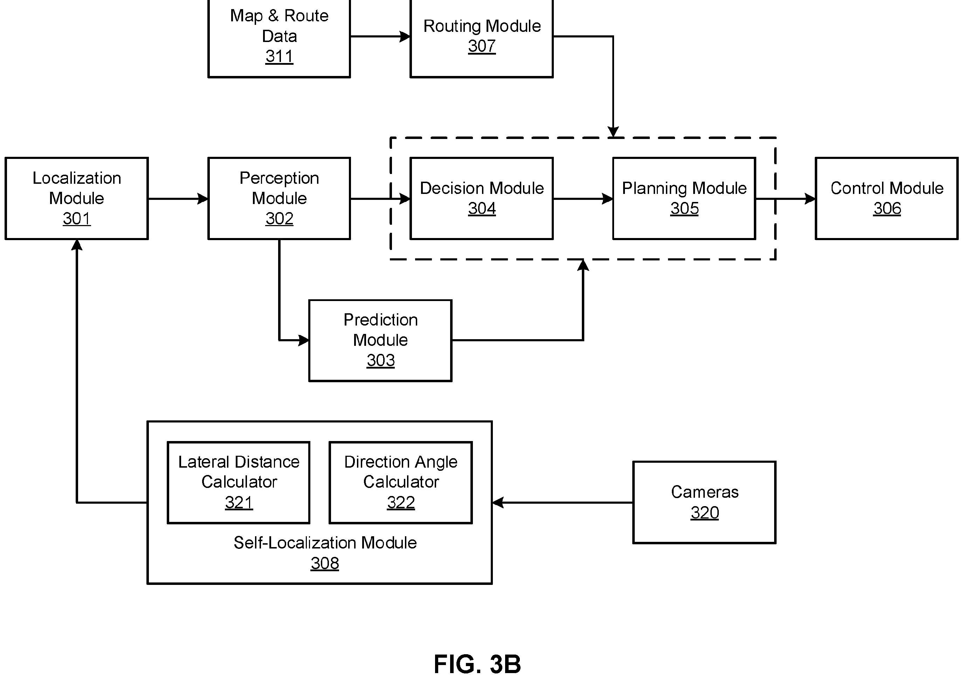

Figures 3A and 3B are block diagrams illustrating an example of a perception and planning system used with an autonomous vehicle according to one embodiment. System 300 may be implemented as a part of autonomous vehicle 101 of Figure 1 including, but is not limited to, perception and planning system 110, control system 111, and sensor system 115. Referring to Figures 3A-3B, perception and planning system 110 includes, but is not limited to, localization module 301, perception module 302, prediction module 303, decision module 304, planning module 305, control module 306, routing module 307, and self-localization module 308.

Some or all of modules 301-308 may be implemented in software, hardware, or a combination thereof. For example, these modules may be installed in persistent storage device 352, loaded into memory 351, and executed by one or more processors (not shown). Note that some or all of these modules may be communicatively coupled to or integrated with some or all modules of vehicle control system 111 of Figure 2. Some of modules 301-308 may be integrated together as an integrated module.

Localization module 301 determines a current location of autonomous vehicle 300 (e.g., leveraging GPS unit 212) and manages any data related to a trip or route of a user. Localization module 301 (also referred to as a map and route module) manages any data related to a trip or route of a user. A user may log in and specify a starting location and a destination of a trip, for example, via a user interface. Localization module 301 communicates with other components of autonomous vehicle 300, such as map and route information 311, to obtain the trip related data. For example, localization module 301 may obtain location and route information from a location server and a map and POI (MPOI) server. A location server provides location services and an MPOI server provides map services and the POIs of certain locations, which may be cached as part of map and route information 311. While autonomous vehicle 300 is moving along the route, localization module 301 may also obtain real-time traffic information from a traffic information system or server.

Based on the sensor data provided by sensor system 115 and localization information obtained by localization module 301, a perception of the surrounding environment is determined by perception module 302. The perception information may represent what an ordinary driver would perceive surrounding a vehicle in which the driver is driving. The perception can include the lane configuration (e.g., straight or curve lanes), traffic light signals, a relative position of another vehicle, a pedestrian, a building, crosswalk, or other traffic related signs (e.g., stop signs, yield signs), etc., for example, in a form of an object.

Perception module 302 may include a computer vision system or functionalities of a computer vision system to process and analyze images captured by one or more cameras in order to identify objects and/or features in the environment of autonomous vehicle. The objects can include traffic signals, road way boundaries, other vehicles, pedestrians, and/or obstacles, etc. The computer vision system may use an object recognition algorithm, video tracking, and other computer vision techniques. In some embodiments, the computer vision system can map an environment, track objects, and estimate the speed of objects, etc. Perception module 302 can also detect objects based on other sensors data provided by other sensors such as a radar and/or LIDAR.

For each of the objects, prediction module 303 predicts what the object will behave under the circumstances. The prediction is performed based on the perception data perceiving the driving environment at the point in time in view of a set of map/rout information 311 and traffic rules 312. For example, if the object is a vehicle at an opposing direction and the current driving environment includes an intersection, prediction module 303 will predict whether the vehicle will likely move straight forward or make a turn. If the perception data indicates that the intersection has no traffic light, prediction module 303 may predict that the vehicle may have to fully stop prior to enter the intersection. If the perception data indicates that the vehicle is currently at a left-turn only lane or a right-turn only lane, prediction module 303 may predict that the vehicle will more likely make a left turn or right turn respectively.

For each of the objects, decision module 304 makes a decision regarding how to handle the object. For example, for a particular object (e.g., another vehicle in a crossing route) as well as its metadata describing the object (e.g., a speed, direction, turning angle), decision module 304 decides how to encounter the object (e.g., overtake, yield, stop, pass). Decision module 304 may make such decisions according to a set of rules such as traffic rules or driving rules 312, which may be stored in persistent storage device 352.

Routing module 307 is configured to provide one or more routes or paths from a starting point to a destination point. For a given trip from a start location to a destination location, for example, received from a user, routing module 307 obtains route and map information 311 and determines all possible routes or paths from the starting location to reach the destination location. Routing module 307 may generate a reference line in a form of a topographic map for each of the routes it determines from the starting location to reach the destination location. A reference line refers to an ideal route or path without any interference from others such as other vehicles, obstacles, or traffic condition. That is, if there is no other vehicle, pedestrians, or obstacles on the road, an ADV should exactly or closely follows the reference line. The topographic maps are then provided to decision module 304 and/or planning module 305. Decision module 304 and/or planning module 305 examine all of the possible routes to select and modify one of the most optimal route in view of other data provided by other modules such as traffic conditions from localization module 301, driving environment perceived by perception module 302, and traffic condition predicted by prediction module 303. The actual path or route for controlling the ADV may be close to or different from the reference line provided by routing module 307 dependent upon the specific driving environment at the point in time.

Based on a decision for each of the objects perceived, planning module 305 plans a path or route for the autonomous vehicle, as well as driving parameters (e.g., distance, speed, and/or turning angle), using a reference line provided by routing module 307 as a basis. That is, for a given object, decision module 304 decides what to do with the object, while planning module 305 determines how to do it. For example, for a given object, decision module 304 may decide to pass the object, while planning module 305 may determine whether to pass on the left side or right side of the object. Planning and control data is generated by planning module 305 including information describing how vehicle 300 would move in a next moving cycle (e.g., next route/path segment). For example, the planning and control data may instruct vehicle 300 to move 10 meters at a speed of 30 mile per hour (mph), then change to a right lane at the speed of 25 mph.

Based on the planning and control data, control module 306 controls and drives the autonomous vehicle, by sending proper commands or signals to vehicle control system 111, according to a route or path defined by the planning and control data. The planning and control data include sufficient information to drive the vehicle from a first point to a second point of a route or path using appropriate vehicle settings or driving parameters (e.g., throttle, braking, and turning commands) at different points in time along the path or route.

In one embodiment, the planning phase is performed in a number of planning cycles, also referred to as command cycles, such as, for example, in every time interval of 100 milliseconds (ms). For each of the planning cycles or command cycles, one or more control commands will be issued based on the planning and control data. That is, for every 100 ms, planning module 305 plans a next route segment or path segment, for example, including a target position and the time required for the ADV to reach the target position. Alternatively, planning module 305 may further specify the specific speed, direction, and/or steering angle, etc. In one embodiment, planning module 305 plans a route segment or path segment for the next predetermined period of time such as 5 seconds. For each planning cycle, planning module 305 plans a target position for the current cycle (e.g., next 5 seconds) based on a target position planned in a previous cycle. Control module 306 then generates one or more control commands (e.g., throttle, brake, steering control commands) based on the planning and control data of the current cycle.

Note that decision module 304 and planning module 305 may be integrated as an integrated module. Decision module 304/planning module 305 may include a navigation system or functionalities of a navigation system to determine a driving path for the autonomous vehicle. For example, the navigation system may determine a series of speeds and directional headings to effect movement of the autonomous vehicle along a path that substantially avoids perceived obstacles while generally advancing the autonomous vehicle along a roadway-based path leading to an ultimate destination. The destination may be set according to user inputs via user interface system 113. The navigation system may update the driving path dynamically while the autonomous vehicle is in operation. The navigation system can incorporate data from a GPS system and one or more maps so as to determine the driving path for the autonomous vehicle.

Decision module 304/planning module 305 may further include a collision avoidance system or functionalities of a collision avoidance system to identify, evaluate, and avoid or otherwise negotiate potential obstacles in the environment of the autonomous vehicle. For example, the collision avoidance system may effect changes in the navigation of the autonomous vehicle by operating one or more subsystems in control system 111 to undertake swerving maneuvers, turning maneuvers, braking maneuvers, etc. The collision avoidance system may automatically determine feasible obstacle avoidance maneuvers on the basis of surrounding traffic patterns, road conditions, etc. The collision avoidance system may be configured such that a swerving maneuver is not undertaken when other sensor systems detect vehicles, construction barriers, etc. in the region adjacent the autonomous vehicle that would be swerved into. The collision avoidance system may automatically select the maneuver that is both available and maximizes safety of occupants of the autonomous vehicle. The collision avoidance system may select an avoidance maneuver predicted to cause the least amount of acceleration in a passenger cabin of the autonomous vehicle.

In one embodiment, self-localization module 308 is configured to determine a relative position within a lane in which the vehicle is driving using certain sensors mounted on a variety of locations or spots of the vehicles. For example, certain cameras may be mounted on different locations of the vehicles to capture images with respect to the surrounding environment of the vehicle. The cameras may be utilized to capture images regarding the edges of the lanes. Based on the captured images, distances between the vehicle and the edges of the lane or road may be determined using an image recognition process or algorithm.

Based on the distances between the vehicle and the edges of the lane, the local relative position of the vehicle within the lane can be determined. A local relative position of a vehicle within a lane refers to an angle between the heading direction of the vehicle and the direction of the lane (e.g., longitudinal vector of a center line or reference line), as well as a distance (e.g., shortest distance) between the vehicle (e.g., center of the vehicle) and the center/reference line of the lane. The local relative position of the vehicle can be fed back to the localization module 301 to assist determining the position/location of the vehicle, which can be utilized by other downstream modules such as planning module 305 and control module 306, etc. as shown in Figure 3B.

In one embodiment, self-localization module 308 includes a lateral distance calculator 321 and direction angle calculator 322. Lateral distance calculator 321 is configured to calculate a distance between the vehicle and the center line of the lane. Direction angle calculator 322 is configured to calculate an angle between the heading direction of the vehicle and the center line of the lane. The distance and the angle may be calculated based on the distances between multiple spots of the vehicle and the left and right edges of the lane. The distance between the spots of the vehicle and the edges of the lane can be derived from the images captured using the cameras within the proximity of those spots. Thus, it is important to mount certain cameras at certain spots of the vehicles for the purpose of determining a local relative position of the vehicle within the lane. In one embodiment, the cameras are mounted on the most outer spots of the vehicle, i.e., spots closest to the edges of the lane.

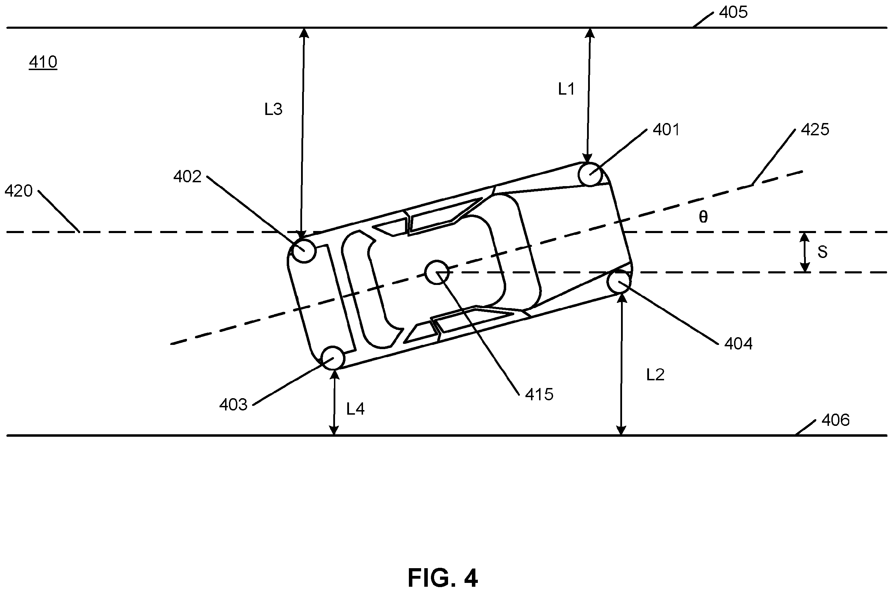

Referring now to Figure 4, in this embodiment, there are at least four cameras 401-404 mounted on four corners of the vehicle 400, such as cameras 401-404. The lenses of the cameras 401-404 are configured to face outwardly toward the edges 405-406 of lane 410. The mounting locations of cameras on the vehicle are determined to measure the distance between the closest spots of the vehicle and the edges 405-406 of lane 410. In one embodiment, cameras 401-404 are mounted on four corners of the vehicles. In this embodiment, camera 401 is mounted on the left front corner and camera 402 is mounted on the right front corner of the vehicle. Camera 403 is mounted on the left back corner and camera 404 is mounted on the right back corner of the vehicle.

When the vehicle is moving through lane 410, cameras 401-404 periodically or constantly capturing images with respect to the edges 405-406 of lane 410. The images may be stored in a persistent storage device, such as persistent storage device 352 as a part of images 315. Note that images 315 may be stored as a part of or being associated with driving statistics 313 captured and recorded (e.g., with time stamps, associated locations) during the autonomous driving of the vehicle. The captured images can be utilized by self-localization module 308 to determine a local relative position of the vehicle within lane 410, which may be utilized by localization module 301 to determine the precise location of the vehicle. The precise location of the vehicle can include the absolute location determined based on the GPS and IMU information and the relative position within the lane determined based on the images captured by the cameras mounted various strategy mounting spots of the vehicle.

According to one embodiment, self-localization module 308 includes a distance measuring module or an image analysis module (not shown) to analyze and measure a distance between a camera capturing an image and a target object (e.g., an edge of a lane). There are many well-known algorithms or methods available to measure the distance based on images, whose details would not be described herein. As shown in Figure 4, the distance measuring module measures a first distance (L1) between camera 401 and edge 405 of lane 410 (e.g., the shortest distance between camera 401 and the left edge 405) based on a first image captured by camera 401. The distance measuring module measures second distance (L2) between camera 402 and edge 406 of lane 410 (e.g., the shortest distance between camera 402 and the right edge 406) based on a second image captured by camera 402. Similarly, the distance measuring module measures a third distance (L3) between camera 403 and edge 405 of lane 410 based on a third image captured by camera 403. The distance measuring module measures a fourth distance (L4) between camera 404 and edge 406 of lane 410 based on a fourth image captured by camera 404.

Based on the distances L1 to L4, lateral distance calculator 321 is configured to calculate a distance (S) between a position of the vehicle and the center line (or reference line) 420 of lane 410. In one embodiment, the position of the vehicle is represented by the center point 415 of the vehicle in view of the vehicle length (VL) and the vehicle width (VW). The physical dimension (e.g., VL and VW) of a vehicle may vary dependent upon the manufacturer of the vehicle. Such physical specification of the vehicle may be obtained from manufacturer and stored within the vehicle. In one embodiment, the lateral distance S may be determined based on the difference between (L1 + L3) and (L2 + L4). In a particular embodiment, the lateral distance S may be determined as follows:

$$S = [(L1 + L3) - (L2 + L4)] / 2$$

A positive value of lateral distance S indicates that the majority of the vehicle (e.g., center of the vehicle) is currently on the right side of the center line 420 of lane 410. Similarly, a negative value of lateral distance S indicates that the vehicle is currently positioned on the left side of the center line 420 of lane 410.

In addition, direction angle calculator 322 is configured to calculate an angle ($\theta$) between a heading direction of the vehicle and a direction of lane 410. The direction of lane 410 is represented by a longitudinal vector associated with center line 420. Similarly, the heading direction of the vehicle refers to the longitudinal vector along the frontend and backend of the vehicle, such as, for example, line or vector 425. In one embodiment, the angle θ between the directions of the vehicle and lane 410 may be determined based on a difference between L1 and L3 in view of the vehicle length VL of the vehicle. Alternatively, the angle θ may be determined based on a difference between L2 and L4 in view of the vehicle length VL. For example, the angle θ may be determined based on a ratio of |L1 - L3| / VL or |L2 - L4| / VL. In a particular embodiment, the angle θ may be determined as follows:

$$\theta = \arcsin\left(|L1 - L3| / VL\right),$$

or

$$\theta = \arcsin\left(|L2 - L4| / VL\right)$$

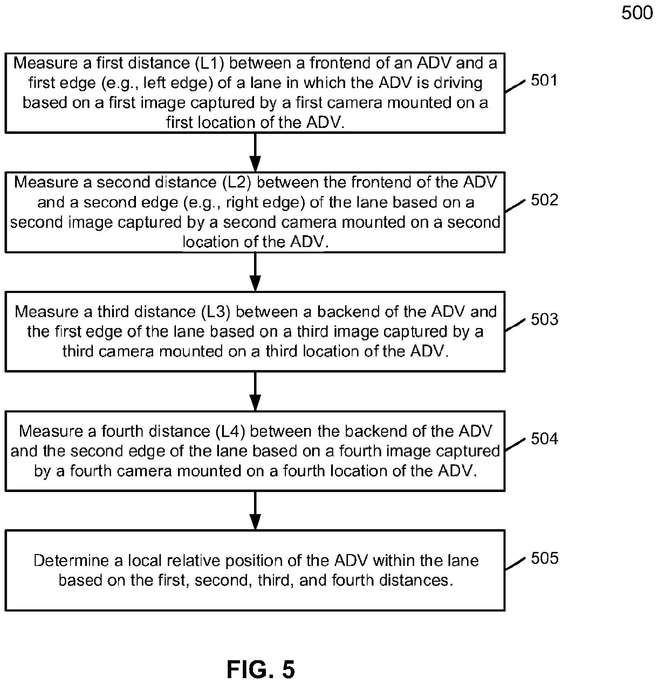

Figure 5 is a flow diagram illustrating a process of determining a local relative position of an autonomous driving vehicle within a lane according to one embodiment. Process 500 may be performed by processing logic which may include software, hardware, or a combination thereof. For example, process 500 may be performed by self-localization module 308. Referring to Figure 5, in operation 501, processing logic measures a first distance between a frontend of an ADV and a left edge of a lane in which the ADV is driving based on a first image captured by a first camera mounted on a first mounting location or mounting spot of the ADV. In operation, processing logic measures a first distance between a frontend of an ADV and a first edge (e.g., left edge) of a lane in which the ADV is driving based on a first image captured by a first camera mounted on a first mounting location or mounting spot of the frontend of the ADV. In operation 502, processing logic measures a second distance between the frontend of the ADV and a second edge (e.g., right edge) of the lane based on a second image captured by a second camera mounted on a second mounting location or mounting spot of the frontend of the ADV. In operation 503, processing logic measures a third distance between a backend of the ADV and the first edge of the lane based on a third image captured by a third camera mounted on a third mounting location or mounting spot of the backend of the ADV. In operation 504, processing logic measures a fourth distance between the backend of the ADV and the second edge of the lane based on the fourth image captured by a fourth camera mounted on a fourth mounting location or mounting spot of the backend of the ADV. In operation 505, a local relative location/position of the ADV (e.g., lateral distance, angle) is determined based on the first distance, second distance, third distance, and the fourth distance.

As described above, the self-localization techniques described above can also be utilized to evaluate the quality of autonomous driving methods or algorithms that are utilized to plan and control autonomous driving vehicles. The local relative positions of vehicles can be utilized to determine whether a particular planning and control algorithm has been performed to achieve the expected results, etc. Such evaluation process can be performed offline based on the driving statistics collected by the vehicles, including the images captured by the cameras with respect to the edges of the lanes in which the vehicles were traveling. For example, evaluation system 125 may include self-localization module 308 to determine the local relative positions of the vehicles at different points in time within different lanes or roads. The autonomous driving algorithms or methods may be modified or improved in view of the evaluation.

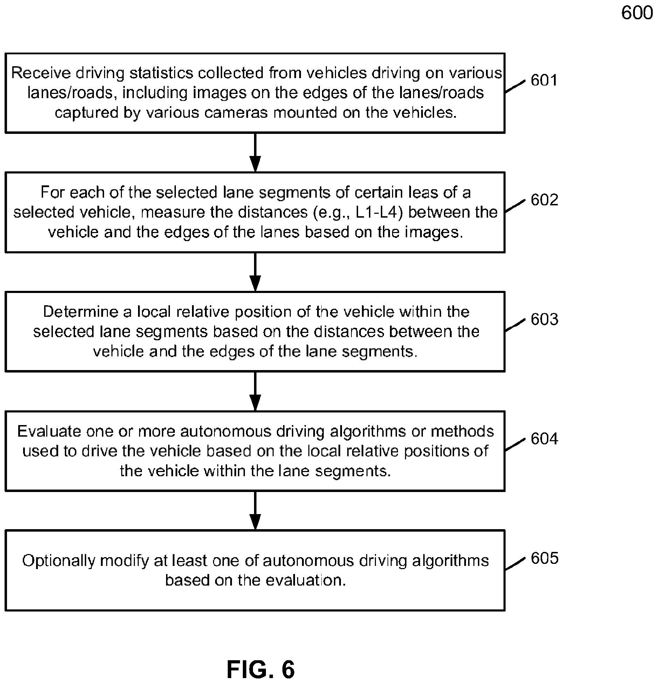

Figure 6 is a flow diagram illustrating a process of evaluating an autonomous driving planning method according to one embodiment. Process 600 may be performed by processing logic which may include software, hardware, or a combination thereof. For example, process 600 may be performed by evaluation system 125 of Figure 1. Referring to Figure 6, in operation 601, processing logic receives driving statistics collected from a variety of vehicles driving on a variety of lanes and roads. The driving statistics may include images captured by cameras of the vehicle with respect to the edges of the lanes or roads the vehicles were driving. In operation 602, for each of the selected lane segments of certain lanes of a selected vehicle, processing logic measures the distances (e.g., L1 to L4) between the vehicle and edges of the lane based on images captured by cameras mounted on different mounting locations of the vehicles. In operation 603, processing logic determines a local relative position of the vehicle within the lane based on the distances between the vehicle and the edges of the lane. In operation 604, processing logic evaluates the autonomous driving methods or algorithms that were used to drive the same vehicle based on the local relative positions of the vehicles at different points in time within different lanes or roads. In operation 605, if there is a needed, the autonomous driving algorithms may be modified or adjusted based on the evaluation.

Note that some or all of the components as shown and described above may be implemented in software, hardware, or a combination thereof. For example, such components can be implemented as software installed and stored in a persistent storage device, which can be loaded and executed in a memory by a processor (not shown) to carry out the processes or operations described throughout this application. Alternatively, such components can be implemented as executable code programmed or embedded into dedicated hardware such as an integrated circuit (e.g., an application specific IC or ASIC), a digital signal processor (DSP), or a field programmable gate array (FPGA), which can be accessed via a corresponding driver and/or operating system from an application. Furthermore, such components can be implemented as specific hardware logic in a processor or processor core as part of an instruction set accessible by a software component via one or more specific instructions.

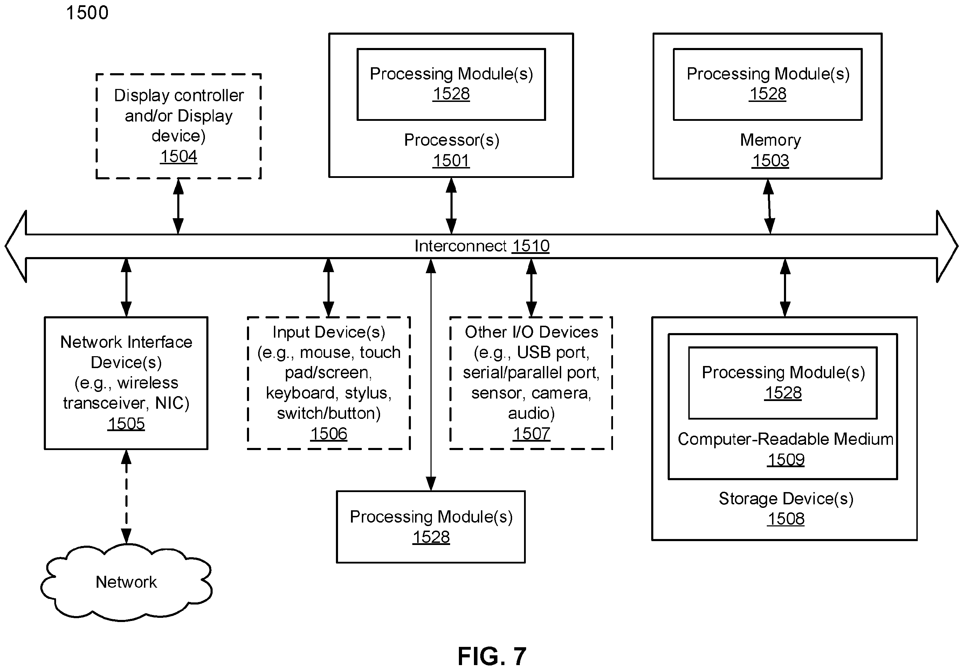

Figure 7 is a block diagram illustrating an example of a data processing system which may be used with one embodiment of the disclosure. For example, system 1500 may represent any of data processing systems described above performing any of the processes or methods described above, such as, for example, perception and planning system 110 or any of servers 103-104 of Figure 1. System 1500 can include many different components. These components can be implemented as integrated circuits (ICs), portions thereof, discrete electronic devices, or other modules adapted to a circuit board such as a motherboard or add-in card of the computer system, or as components otherwise incorporated within a chassis of the computer system.

Note also that system 1500 is intended to show a high level view of many components of the computer system. However, it is to be understood that additional components may be present in certain implementations and furthermore, different arrangement of the components shown may occur in other implementations. System 1500 may represent a desktop, a laptop, a tablet, a server, a mobile phone, a media player, a personal digital assistant (PDA), a Smartwatch, a personal communicator, a gaming device, a network router or hub, a wireless access point (AP) or repeater, a set-top box, or a combination thereof. Further, while only a single machine or system is illustrated, the term "machine" or "system" shall also be taken to include any collection of machines or systems that individually or jointly execute a set (or multiple sets) of instructions to perform any one or more of the methodologies discussed herein.

In one embodiment, system 1500 includes processor 1501, memory 1503, and devices 1505-1508 connected via a bus or an interconnect 1510. Processor 1501 may represent a single processor or multiple processors with a single processor core or multiple processor cores included therein. Processor 1501 may represent one or more general-purpose processors such as a microprocessor, a central processing unit (CPU), or the like. More particularly, processor 1501 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 1501 may also be one or more special-purpose processors such as an application specific integrated circuit (ASIC), a cellular or baseband processor, a field programmable gate array (FPGA), a digital signal processor (DSP), a network processor, a graphics processor, a communications processor, a cryptographic processor, a co-processor, an embedded processor, or any other type of logic capable of processing instructions.

Processor 1501, which may be a low power multi-core processor socket such as an ultra-low voltage processor, may act as a main processing unit and central hub for communication with the various components of the system. Such processor can be implemented as a system on chip (SoC). Processor 1501 is configured to execute instructions for performing the operations and steps discussed herein. System 1500 may further include a graphics interface that communicates with optional graphics subsystem 1504, which may include a display controller, a graphics processor, and/or a display device.

Processor 1501 may communicate with memory 1503, which in one embodiment can be implemented via multiple memory devices to provide for a given amount of system memory. Memory 1503 may include one or more volatile storage (or memory) devices such as random access memory (RAM), dynamic RAM (DRAM), synchronous DRAM (SDRAM), static RAM (SRAM), or other types of storage devices. Memory 1503 may store information including sequences of instructions that are executed by processor 1501, or any other device. For example, executable code and/or data of a variety of operating systems, device drivers, firmware (e.g., input output basic system or BIOS), and/or applications can be loaded in memory 1503 and executed by processor 1501. An operating system can be any kind of operating systems, such as, for example, Robot Operating System (ROS), Windows® operating system from Microsoft®, Mac OS®/iOS® from Apple, Android® from Google®, LINUX, UNIX, or other real-time or embedded operating systems.

System 1500 may further include IO devices such as devices 1505-1508, including network interface device(s) 1505, optional input device(s) 1506, and other optional IO device(s) 1507. Network interface device 1505 may include a wireless transceiver and/or a network interface card (NIC). The wireless transceiver may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. The NIC may be an Ethernet card.

Input device(s) 1506 may include a mouse, a touch pad, a touch sensitive screen (which may be integrated with display device 1504), a pointer device such as a stylus, and/or a keyboard (e.g., physical keyboard or a virtual keyboard displayed as part of a touch sensitive screen). For example, input device 1506 may include a touch screen controller coupled to a touch screen. The touch screen and touch screen controller can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen.

IO devices 1507 may include an audio device. An audio device may include a speaker and/or a microphone to facilitate voice-enabled functions, such as voice recognition, voice replication, digital recording, and/or telephony functions. Other IO devices 1507 may further include universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Devices 1507 may further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors may be coupled to interconnect 1510 via a sensor hub (not shown), while other devices such as a keyboard or thermal sensor may be controlled by an embedded controller (not shown), dependent upon the specific configuration or design of system 1500.

To provide for persistent storage of information such as data, applications, one or more operating systems and so forth, a mass storage (not shown) may also couple to processor 1501. In various embodiments, to enable a thinner and lighter system design as well as to improve system responsiveness, this mass storage may be implemented via a solid state device (SSD). However in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. Also a flash device may be coupled to processor 1501, e.g., via a serial peripheral interface (SPI). This flash device may provide for non-volatile storage of system software, including BIOS as well as other firmware of the system.

Storage device 1508 may include computer-accessible storage medium 1509 (also known as a machine-readable storage medium or a computer-readable medium) on which is stored one or more sets of instructions or software (e.g., module, unit, and/or logic 1528) embodying any one or more of the methodologies or functions described herein. Processing module/unit/logic 1528 may represent any of the components described above, such as, for example, planning module 305, control module 306, and/or self-localization module 308. Processing module/unit/logic 1528 may also reside, completely or at least partially, within memory 1503 and/or within processor 1501 during execution thereof by data processing system 1500, memory 1503 and processor 1501 also constituting machine-accessible storage media. Processing module/unit/logic 1528 may further be transmitted or received over a network via network interface device 1505.

Computer-readable storage medium 1509 may also be used to store the some software functionalities described above persistently. While computer-readable storage medium 1509 is shown in an exemplary embodiment to be a single medium, the term "computer-readable storage medium" should be taken to include a single medium or multiple media (e.g., a centralized or distributed database, and/or associated caches and servers) that store the one or more sets of instructions. The terms "computer-readable storage medium" shall also be taken to include any medium that is capable of storing or encoding a set of instructions for execution by the machine and that cause the machine to perform any one or more of the methodologies of the present disclosure. The term "computer-readable storage medium" shall accordingly be taken to include, but not be limited to, solid-state memories, and optical and magnetic media, or any other non-transitory machine-readable medium.

Processing module/unit/logic 1528, components and other features described herein can be implemented as discrete hardware components or integrated in the functionality of hardware components such as ASICS, FPGAs, DSPs or similar devices. In addition, processing module/unit/logic 1528 can be implemented as firmware or functional circuitry within hardware devices. Further, processing module/unit/logic 1528 can be implemented in any combination hardware devices and software components.

Note that while system 1500 is illustrated with various components of a data processing system, it is not intended to represent any particular architecture or manner of interconnecting the components; as such details are not germane to embodiments of the present disclosure. It will also be appreciated that network computers, handheld computers, mobile phones, servers, and/or other data processing systems which have fewer components or perhaps more components may also be used with embodiments of the disclosure.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments of the disclosure also relate to an apparatus for performing the operations herein. Such a computer program is stored in a non-transitory computer readable medium. A machine-readable medium includes any mechanism for storing information in a form readable by a machine (e.g., a computer). For example, a machine-readable (e.g., computer-readable) medium includes a machine (e.g., a computer) readable storage medium (e.g., read only memory ("ROM"), random access memory ("RAM"), magnetic disk storage media, optical storage media, flash memory devices).

The processes or methods depicted in the preceding figures may be performed by processing logic that comprises hardware (e.g. circuitry, dedicated logic, etc.), software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

Embodiments of the present disclosure are not described with reference to any particular programming language. It will be appreciated that a variety of programming languages may be used to implement the teachings of embodiments of the disclosure as described herein.

In the foregoing specification, embodiments of the disclosure have been described with reference to specific exemplary embodiments thereof. It will be evident that various modifications may be made thereto without departing from the scope of the disclosure as set forth in the following claims. The specification and drawings are, accordingly, to be regarded in an illustrative sense rather than a restrictive sense.

**Claims**

1. A computer-implemented method for self-localization of an autonomous driving vehicle, the method comprising:

   measuring a first distance (L1) between a frontend of an autonomous driving vehicle (ADV) and a left edge of a lane in which the ADV is driving based on a first image captured by a first camera mounted on a first location of the frontend of the ADV;
   measuring a second distance (L2) between the frontend of the ADV and a right edge of the lane based on a second image captured by a second camera mounted on a second location of the frontend of the ADV;
   measuring a third distance (L3) between a backend of the ADV and the left edge of the lane based on a third image captured by a third camera mounted on a third location of the backend of the ADV;
   measuring a fourth distance (L4) between the backend of the ADV and the right edge of the lane based on a fourth image captured by a fourth camera mounted on a fourth location of the backend of the ADV; and
   determining a local relative position of the ADV within the lane based on the first distance, the second distance, the third distance, and the fourth distance, wherein determining a local relative position of the ADV within the lane comprises calculating an angle between a heading direction of the ADV and a center line of the lane based on the first distance and the third distance or based on the second distance and the fourth distance in view of a physical dimension of the ADV.

2. The method of claim 1, wherein the angle between the heading direction of the ADV and the center line of the lane is determined based on a difference between L1 and L3 or a difference between L2 and L4 in view of a length of the ADV.

3. The method of claim 2, wherein the angle between the heading direction of the ADV and the center line of the lane is determined based on arcsin (|L3-L1| / the length of the ADV) or based on arcsin (|L2-L4| / the length of the ADV).

4. The method of claim 1, further comprising calculating a fifth distance between a center of the ADV and the center line of the lane based on the first distance, the second distance, the third distance, and the fourth distance, preferably the fifth distance between the center of the ADV and the center line of the lane is calculated based on (L1 + L3 - L2 - L4) / 2.

5. The method of claim 1, wherein the first camera is mounted on a left front corner of the ADV and the second camera is mounted on a right front corner of the ADV.

6. The method of claim 1, wherein the third camera is mounted on a back left corner of the ADV and the fourth camera is mounted on a back right corner of the ADV.

7. A non-transitory machine-readable medium having instructions stored therein, which when executed by a processor, cause the processor to perform operations, the operations comprising:

   measuring a first distance (L1) between a frontend of an autonomous driving vehicle (ADV) and a left edge of a lane in which the ADV is driving based on a first image captured by a first camera mounted on a first location of the frontend of the ADV,

measuring a second distance (L2) between the frontend of the ADV and a right edge of the lane based on a second image captured by a second camera mounted on a second location of the frontend of the ADV,

measuring a third distance (L3) between a backend of the ADV and the left edge of the lane based on a third image captured by a third camera mounted on a third location of the backend of the ADV,

measuring a fourth distance (L4) between the backend of the ADV and the right edge of the lane based on a fourth image captured by a fourth camera mounted on a fourth location of the backend of the ADV, and

determining a local relative position of the ADV within the lane based on the first distance, the second distance, the third distance, and the fourth distance, wherein determining a local relative position of the ADV within the lane comprises calculating an angle between a heading direction of the ADV and a center line of the lane based on the first distance and the third distance or based on the second distance and the fourth distance in view of a physical dimension of the ADV.

8. The machine-readable medium of claim 7, wherein the angle between the heading direction of the ADV and the center line of the lane is determined based on a difference between L1 and L3 or a difference between L2 and L4 in view of a length of the ADV.

9. The machine-readable medium of claim 8, wherein the angle between the heading direction of the ADV and the center line of the lane is determined based on arcsin (|L3-L1| / the length of the ADV) or based on arcsin (|L2-L4| / the length of the ADV).

10. The machine-readable medium of claim 9, wherein the operations further comprise calculating a fifth distance between a center of the ADV and the center line of the lane based on the first distance, the second distance, the third distance, and the fourth distance, preferably the fifth distance between the center of the ADV and the center line of the lane is calculated based on (L1 + L3 - L2 - L4) / 2.

11. The machine-readable medium of claim 7, wherein the first camera is mounted on a left front corner of the ADV and the second camera is mounted on a right front corner of the ADV.

12. The machine-readable medium of claim 7, wherein the third camera is mounted on a back left corner of the ADV and the fourth camera is mounted on a back right corner of the ADV.

13. A data processing system, comprising:

a processor; and
a memory coupled to the processor to store instructions, which when executed by the processor, cause the processor to perform operations, the operations including

measuring a first distance (L1) between a frontend of an autonomous driving vehicle (ADV) and a left edge of a lane in which the ADV is driving based on a first image captured by a first camera mounted on a first location of the frontend of the ADV,

measuring a second distance (L2) between the frontend of the ADV and a right edge of the lane based on a second image captured by a second camera mounted on a second location of the frontend of the ADV,

measuring a third distance (L3) between a backend of the ADV and the left edge of the lane based on a third image captured by a third camera mounted on a third location of the backend of the ADV,

measuring a fourth distance (L4) between the backend of the ADV and the right edge of the lane based on a fourth image captured by a fourth camera mounted on a fourth location of the backend of the ADV, and

determining a local relative position of the ADV within the lane based on the first distance, the second distance, the third distance, and the fourth distance,

wherein determining a local relative position of the ADV within the lane comprises calculating an angle between a heading direction of the ADV and a center line of the lane based on the first distance and the third distance or based on the second distance and the fourth distance in view of a physical dimension of the ADV.

**Patentansprüche**

1. Computer-implementiertes Verfahren zur Selbstlokalisierung eines autonom fahrenden Fahrzeugs, wobei das Verfahren umfasst Messen eines ersten Abstands (L1) zwischen einem Frontende eines autonom fahrenden Fahrzeugs (ADV) und einem linken Rand einer Fahrspur, auf der das ADV fährt, basierend auf einem ersten Bild, das von einer ersten Kamera aufgenommen wurde, die an einer ersten Stelle des Frontendes des ADV angebracht ist; Messen eines zweiten Abstands (L2) zwischen dem Frontend des ADV und einem rechten Rand der Fahrspur basierend auf einem zweiten Bild, das von einer zweiten Kamera erfasst wurde, die an einer zweiten Stelle des Frontendes des ADV angebracht ist;

Messen eines dritten Abstands (L3) zwischen einem Heckende des ADV und dem linken Rand der Fahrspur auf der Grundlage eines dritten Bildes, das von einer dritten Kamera aufgenommen wurde, die an einer dritten Stelle des Heckendes des ADV angebracht ist;

Messen eines vierten Abstands (L4) zwischen dem Heckende des ADV und dem rechten Rand der Fahrspur auf der Grundlage eines vierten Bilds, das von einer vierten Kamera aufgenommen wurde, die an einer vierten Stelle des Heckendes des ADV angebracht ist; und

Bestimmen einer lokalen relativen Position des ADV innerhalb der Fahrspur auf der Grundlage des ersten Abstands, des zweiten Abstands, des dritten Abstands und des vierten Abstands, wobei das Bestimmen einer lokalen relativen Position des ADV innerhalb der Fahrspur das Berechnen eines Winkels zwischen einer Fahrtrichtung des ADV und einer Mittellinie der Fahrspur auf der Grundlage des ersten Abstands und des dritten Abstands oder auf der Grundlage des zweiten Abstands und des vierten Abstands im Hinblick auf eine physikalische Dimension des ADV umfasst.

2. Verfahren nach Anspruch 1, wobei der Winkel zwischen der Fahrtrichtung des ADV und der Mittellinie der Fahrspur auf der Grundlage einer Differenz zwischen L1 und L3 oder einer Differenz zwischen L2 und L4 im Hinblick auf eine Länge des ADV bestimmt wird.

3. Verfahren nach Anspruch 2, wobei der Winkel zwischen der Fahrtrichtung des ADV und der Mittellinie der Fahrspur basierend auf arcsin (|L3-L1| / der Länge des ADV) oder basierend auf arcsin (|L2-L4| / der Länge des ADV) bestimmt wird.

4. Verfahren nach Anspruch 1, ferner umfassend ein Berechnen eines fünften Abstands zwischen einer Mitte des ADV und der Mittellinie der Fahrspur auf der Grundlage des ersten Abstands, des zweiten Abstands, des dritten Abstands und des vierten Abstands, wobei der fünfte Abstand zwischen der Mitte des ADV und der Mittellinie der Fahrspur vorzugsweise auf der Grundlage von (L1 + L3 - L2 - L4) /2 berechnet wird.

5. Verfahren nach Anspruch 1, wobei die erste Kamera an einer linken vorderen Ecke des ADV angebracht ist und die zweite Kamera an einer rechten vorderen Ecke des ADV angebracht ist.

6. Verfahren nach Anspruch 1, wobei die dritte Kamera an einer hinteren linken Ecke des ADV angebracht ist und die vierte Kamera an einer hinteren rechten Ecke des ADV angebracht ist.

7. Nicht-transitorisches, maschinenlesbares Medium mit darin gespeicherten Anweisungen, die, wenn sie von einem Prozessor ausgeführt werden, den Prozessor veranlassen, Operationen durchzuführen, wobei die Operationen umfassen:

Messen eines ersten Abstands (L1) zwischen einem Frontende eines autonom fahrenden Fahrzeugs (ADV) und einem linken Rand einer Fahrspur, in der das ADV fährt, basierend auf einem ersten Bild, das von einer ersten Kamera aufgenommen wurde, die an einer ersten Stelle des Frontendes des ADV angebracht ist,

Messen eines zweiten Abstands (L2) zwischen dem Frontende des ADV und einem rechten Rand der Fahrspur basierend auf einem zweiten Bild, das von einer zweiten Kamera aufgenommen wurde, die an einer zweiten Stelle des Frontendes des ADV angebracht ist,

Messen eines dritten Abstands (L3) zwischen einem Heckende des ADV und dem linken Rand der Fahrspur auf der Grundlage eines dritten Bildes, das von einer dritten Kamera aufgenommen wurde, die an einer dritten Stelle des Heckendes des ADV angebracht ist,

Messen eines vierten Abstands (L4) zwischen dem Heckende des ADV und dem rechten Rand der Fahrspur auf der Grundlage eines vierten Bilds, das von einer vierten Kamera aufgenommen wurde, die an einer vierten Stelle des Heckendes des ADV angebracht ist, und

Bestimmen einer lokalen relativen Position des ADV innerhalb der Fahrspur basierend auf dem ersten Abstand, dem zweiten Abstand, dem dritten Abstand und dem vierten Abstand,

wobei das Bestimmen einer lokalen relativen Position des ADV innerhalb der Fahrspur das Berechnen eines Winkels zwischen einer Fahrtrichtung des ADV und einer Mittellinie der Fahrspur auf der Grundlage des ersten Abstands und des dritten Abstands oder auf der Grundlage des zweiten Abstands und des vierten Abstands im Hinblick auf eine physikalische Dimension des ADV umfasst.

8. Maschinenlesbares Medium nach Anspruch 7, wobei der Winkel zwischen der Fahrtrichtung des ADV und der Mittellinie der Fahrspur auf der Grundlage einer Differenz zwischen L1 und L3 oder einer Differenz zwischen L2 und L4 im Hinblick auf eine Länge des ADV bestimmt wird.

9. Maschinenlesbares Medium nach Anspruch 8, wobei der Winkel zwischen der Fahrtrichtung des ADV und der Mittellinie der Fahrspur basierend auf arcsin (|L3-L1| / der Länge des ADV) oder basierend auf arcsin (|L2-L4| / der Länge des ADV) bestimmt wird.

10. Maschinenlesbares Medium nach Anspruch 9, wobei die Operationen ferner ein Berechnen eines fünften Abstands zwischen einer Mitte des ADV und der Mittellinie der Fahrspur auf der Grundlage des ersten Abstands, des zweiten Abstands, des dritten Abstands und des vierten Abstands umfassen, wobei der fünfte Abstand zwischen der Mitte des ADV und der Mittellinie der Fahrspur vorzugsweise auf der Grundlage von (L1 + L3 - L2 - L4) /2 berechnet wird.

11. Maschinenlesbares Medium nach Anspruch 7, wobei die erste Kamera an einer linken vorderen Ecke des ADV angebracht ist und die zweite Kamera an einer rechten vorderen Ecke des ADV angebracht ist.

12. Maschinenlesbares Medium nach Anspruch 7, wobei die dritte Kamera an einer hinteren linken Ecke des ADV angebracht ist und die vierte Kamera an einer hinteren rechten Ecke des ADV angebracht ist.

13. Datenverarbeitungssystem, umfassend
einen Prozessor; und
einen Speicher, der mit dem Prozessor gekoppelt ist, um Befehle zu speichern, die, wenn sie von dem Prozessor ausgeführt werden, den Prozessor veranlassen, Operationen durchzuführen, wobei die Operationen umfassen:

Messen eines ersten Abstands (L1) zwischen einem Frontende eines autonom fahrenden Fahrzeugs (ADV) und einem linken Rand einer Fahrspur, auf der das ADV fährt, basierend auf einem ersten Bild, das von einer ersten Kamera aufgenommen wurde, die an einer ersten Stelle des Frontendes des ADV angebracht ist,
Messen eines zweiten Abstands (L2) zwischen dem Frontende des ADV und einem rechten Rand der Fahrspur basierend auf einem zweiten Bild, das von einer zweiten Kamera aufgenommen wurde, die an einer zweiten Stelle des Frontendes des ADV angebracht ist,
Messen eines dritten Abstands (L3) zwischen einem Heckende des ADV und dem linken Rand der Fahrspur auf der Grundlage eines dritten Bildes, das von einer dritten Kamera aufgenommen wurde, die an einer dritten Stelle des Heckendes des ADV angebracht ist,
Messen eines vierten Abstands (L4) zwischen dem Heckende des ADV und dem rechten Rand der Fahrspur auf der Grundlage eines vierten Bilds, das von einer vierten Kamera aufgenommen wurde, die an einer vierten Stelle des Heckendes des ADV angebracht ist, und
Bestimmen einer lokalen relativen Position des ADV innerhalb der Fahrspur basierend auf dem ersten Abstand, dem zweiten Abstand, dem dritten Abstand und dem vierten Abstand,
wobei das Bestimmen einer lokalen relativen Position des ADV innerhalb der Fahrspur das Berechnen eines Winkels zwischen einer Fahrtrichtung des ADV und einer Mittellinie der Fahrspur auf der Grundlage des ersten Abstands und des dritten Abstands oder auf der Grundlage des zweiten Abstands und des vierten Abstands im Hinblick auf eine physikalische Dimension des ADV umfasst.

**Revendications**

1. Procédé mis en œuvre par ordinateur pour auto-localisation d'un véhicule à conduite autonome, le procédé comprenant :

mesurer une première distance (L1) entre une extrémité avant d'un véhicule à conduite autonome (ADV) et un bord gauche d'une voie dans laquelle l'ADV se déplace, sur la base d'une première image capturée par une première caméra montée sur un premier emplacement de l'extrémité avant de l'ADV ;
mesurer une deuxième distance (L2) entre l'extrémité avant de l'ADV et un bord droit de la voie, sur la base d'une deuxième image capturée par une deuxième caméra montée sur un deuxième emplacement de l'extrémité avant de l'ADV ;
mesurer une troisième distance (L3) entre une extrémité arrière de l'ADV et le bord gauche de la voie, sur la base d'une troisième image capturée par une troisième caméra montée sur un troisième emplacement de l'extrémité arrière de l'ADV ;
mesurer une quatrième distance (L4) entre l'extrémité arrière de l'ADV et le bord droit de la voie, sur la base d'une quatrième image capturée par une quatrième caméra montée sur un quatrième emplacement de l'extrémité arrière de l'ADV ; et
déterminer une position relative locale de l'ADV dans la voie sur la base de la première distance, de la deuxième distance, de la troisième distance et de la quatrième distance, déterminer une position relative locale de l'ADV dans la voie comprenant calculer un angle entre une direction de cap de l'ADV et une ligne médiane de la voie sur la base de la première distance et de la troisième distance ou sur la base de la deuxième distance et de la quatrième distance, compte tenu d'une dimension physique de l'ADV.

2. Procédé selon la revendication 1, dans lequel l'angle entre la direction de cap de l'ADV et la ligne médiane de la voie est déterminé sur la base d'une différence entre L1 et L3 ou d'une différence entre L2 et L4, compte tenu d'une longueur de l'ADV.

3. Procédé selon la revendication 2, dans lequel l'angle entre la direction de cap de l'ADV et la ligne médiane de la voie est déterminé sur la base d'arcsin(|L3-L1| / la longueur de l'ADV) ou sur la base d'arcsin (|L2-L4| / la longueur de l'ADV).

4. Procédé selon la revendication 1, comprenant en outre calculer une cinquième distance entre un centre de l'ADV et la ligne médiane de la voie sur la base de la première distance, de la deuxième distance, de la troisième distance et de la quatrième distance, de préférence la cinquième distance entre le centre de l'ADV et la ligne médiane de la voie étant calculée sur la base de (L1+L3-L2-L4)/2.

5. Procédé selon la revendication 1, dans lequel la première caméra est montée sur un coin avant gauche de l'ADV et la deuxième caméra est montée sur un coin avant droit de l'ADV.

6. Procédé selon la revendication 1, dans lequel la troisième caméra est montée sur un coin gauche arrière de l'ADV et la quatrième caméra est montée sur un coin droit arrière de l'ADV.

7. Support non-transitoire lisible par machine, ayant des instructions stockées sur celui-ci, lesquelles, lorsqu'elles sont exécutées par un processeur, amènent le processeur à réaliser des opérations, les opérations comprenant :

     mesurer une première distance (L1) entre une extrémité avant d'un véhicule à conduite autonome (ADV) et un bord gauche d'une voie dans laquelle l'ADV se déplace, sur la base d'une première image capturée par une première caméra montée sur un premier emplacement de l'extrémité avant de l'ADV,
     mesurer une deuxième distance (L2) entre l'extrémité avant de l'ADV et un bord droit de la voie, sur la base d'une deuxième image capturée par une deuxième caméra montée sur un deuxième emplacement de l'extrémité avant de l'ADV,
     mesurer une troisième distance (L3) entre une extrémité arrière de l'ADV et le bord gauche de la voie, sur la base d'une troisième image capturée par une troisième caméra montée sur un troisième emplacement de l'extrémité arrière de l'ADV,
     mesurer une quatrième distance (L4) entre l'extrémité arrière de l'ADV et le bord droit de la voie, sur la base d'une quatrième image capturée par une quatrième caméra montée sur un quatrième emplacement de l'extrémité arrière de l'ADV, et
détermiuer une position relative locale de l'ADV dans la voie sur la base de la première distance, de la deuxième distance, de la troisième distance et de la quatrième distance,
déterminer une position relative locale de l'ADV dans la voie comprenant calculer un angle entre une direction de cap de l'ADV et une ligne médiane de la voie sur la base de la première distance et de la troisième distance ou sur la base de la deuxième distance et de la quatrième distance, compte tenu d'une dimension physique de l'ADV.

8. Support lisible par machine selon la revendication 7, dans lequel l'angle entre la direction de cap de l'ADV et la ligne médiane de la voie est déterminé sur la base d'une différence entre L1 et L3 ou d'une différence entre L2 et L4, compte tenu d'une longueur de l'ADV.

9. Support lisible par machine selon la revendication 8, dans lequel l'angle entre la direction de cap de l'ADV et la ligne médiane de la voie est déterminé sur la base d'arcsin (|L3-L1| / la longueur de l'ADV) ou sur la base d'arcsin (|L2-L4| / la longueur de l'ADV).

10. Support lisible par machine selon la revendication 9, dans lequel les opérations comprennent en outre calculer une cinquième distance entre un centre de l'ADV et la ligne médiane de la voie sur la base de la première distance, de la deuxième distance, de la troisième distance et de la quatrième distance, de préférence la cinquième distance entre le centre de l'ADV et la ligne médiane de la voie étant calculée sur la base de (L1+L3-L2-L4)/2.

11. Support lisible par machine selon la revendication 7, dans lequel la première caméra est montée sur un coin avant gauche de l'ADV et la deuxième caméra est montée sur un coin avant droit de l'ADV.

12. Support lisible par machine selon la revendication 7, dans lequel la troisième caméra est montée sur un coin gauche arrière de l'ADV et la quatrième caméra est montée sur un coin droit arrière de l'ADV.

13. Système de traitement de données, comprenant :

     un processeur ; et
     une mémoire couplée au processeur pour stocker des instructions, lesquelles, lorsqu'elles sont exécutées par le processeur, amènent le processeur à réaliser des opérations, les opérations comprenant

       mesurer une première distance (L1) entre une extrémité avant d'un véhicule à conduite autonome (ADV) et un bord gauche d'une voie dans laquelle l'ADV se déplace, sur la base d'une première image capturée par une première caméra montée sur un premier emplacement de l'extrémité avant de l'ADV ;

mesurer une deuxième distance (L2) entre l'extrémité avant de l'ADV et un bord droit de la voie, sur la base d'une deuxième image capturée par une deuxième caméra montée sur un deuxième emplacement de l'extrémité avant de l'ADV ;

mesurer une troisième distance (L3) entre une extrémité arrière de l'ADV et le bord gauche de la voie, sur la base d'une troisième image capturée par une troisième caméra montée sur un troisième emplacement de l'extrémité arrière de l'ADV ;

mesurer une quatrième distance (L4) entre l'extrémité arrière de l'ADV et le bord droit de la voie, sur la base d'une quatrième image capturée par une quatrième caméra montée sur un quatrième emplacement de l'extrémité arrière de l'ADV ; et

déterminer une position relative locale de l'ADV dans la voie sur la base de la première distance, de la deuxième distance, de la troisième distance et de la quatrième distance,

déterminer une position relative locale de l'ADV dans la voie comprenant calculer un angle entre une direction de cap de l'ADV et une ligne médiane de la voie sur la base de la première distance et de la troisième distance ou sur la base de la deuxième distance et de la quatrième distance, compte tenu d'une dimension physique de l'ADV.

100

Server(s)
(e.g., map & location)
104

Network
102

Server(s)
(e.g., data
analytics system)
103

Data Collector
121

Algorithms/
Models
124

Machine
Learning Engine
122

Driving Statistics
123

Evaluation
System
125

Sensor System
115

Control System
111

Wireless Communication System
112

User Interface System
113

Perception and Planning System
110

Autonomous Vehicle
101

FIG. 1

Sensor System 115
- Camera(s) 211
- GPS Unit 212
- IMU 213
- Radar Unit 214
- LIDAR Unit 215

Control System 111
- Steering Unit 201
- Throttle Unit 202
- Braking Unit 203

FIG. 2

**FIG. 3A**

EP 3 524 494 B1

```
┌─────────────┐         ┌─────────────┐
│  Map & Route│         │   Routing   │
│    Data     │────────▶│   Module    │
│    311      │         │    307      │
└─────────────┘         └─────────────┘
                                 │
                                 │
                                 ▼
┌──────────┐   ┌──────────┐  ┌ ─ ─ ─ ─ ─ ─ ─ ─ ─ ─ ─ ─ ─ ─ ─ ─ ─ ┐      ┌──────────┐
│Localization│ │Perception│  │ ┌──────────┐   ┌──────────┐  │      │ Control  │
│  Module   │─▶│  Module  │─▶│ │ Decision │──▶│ Planning │  │─────▶│  Module  │
│   301     │  │   302    │  │ │  Module  │   │  Module  │  │      │   306    │
└──────────┘   └──────────┘  │ │   304    │   │   305    │  │      └──────────┘
     ▲              │        │ └──────────┘   └──────────┘  │
     │              │        └ ─ ─ ─ ─ ─ ─ ─ ─ ─ ─ ─ ─ ─ ─ ─│─ ─ ┘
     │              ▼                              ▲
     │        ┌──────────┐                         │
     │        │Prediction│                         │
     │        │  Module  │─────────────────────────┘
     │        │   303    │
     │        └──────────┘
     │
     │
┌────┴─────────────────────────────────────────┐
│  ┌──────────────┐   ┌──────────────┐          │
│  │   Lateral    │   │  Direction   │          │        ┌──────────┐
│  │   Distance   │   │    Angle     │          │◀───────│ Cameras  │
│  │  Calculator  │   │  Calculator  │          │        │   320    │
│  │     321      │   │     322      │          │        └──────────┘
│  └──────────────┘   └──────────────┘          │
│         Self-Localization Module              │
│                    308                        │
└───────────────────────────────────────────────┘
```

**FIG. 3B**

**FIG. 4**

EP 3 524 494 B1

500

Measure a first distance (L1) between a frontend of an ADV and a first edge (e.g., left edge) of a lane in which the ADV is driving based on a first image captured by a first camera mounted on a first location of the ADV.　501

Measure a second distance (L2) between the frontend of the ADV and a second edge (e.g., right edge) of the lane based on a second image captured by a second camera mounted on a second location of the ADV.　502

Measure a third distance (L3) between a backend of the ADV and the first edge of the lane based on a third image captured by a third camera mounted on a third location of the ADV.　503

Measure a fourth distance (L4) between the backend of the ADV and the second edge of the lane based on a fourth image captured by a fourth camera mounted on a fourth location of the ADV.　504

Determine a local relative position of the ADV within the lane based on the first, second, third, and fourth distances.　505

**FIG. 5**

EP 3 524 494 B1

600

Receive driving statistics collected from vehicles driving on various lanes/roads, including images on the edges of the lanes/roads captured by various cameras mounted on the vehicles. — 601

For each of the selected lane segments of certain leas of a selected vehicle, measure the distances (e.g., L1-L4) between the vehicle and the edges of the lanes based on the images. — 602

Determine a local relative position of the vehicle within the selected lane segments based on the distances between the vehicle and the edges of the lane segments. — 603

Evaluate one or more autonomous driving algorithms or methods used to drive the vehicle based on the local relative positions of the vehicle within the lane segments. — 604

Optionally modify at least one of autonomous driving algorithms based on the evaluation. — 605

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6173222 B1
- US 20160314358 A1